(19) 

Europäisches
Patentamt
European
Patent Office
Office européen
des brevets

(11)  **EP 2 642 785 B1**

(12)  # EUROPEAN PATENT SPECIFICATION

(45) Date of publication and mention
of the grant of the patent:
**31.07.2019 Bulletin 2019/31**

(21) Application number: **11847457.6**

(22) Date of filing: **08.12.2011**

(51) Int Cl.:
***H04W 24/10*** *(2009.01)*    *H04W 88/06* *(2009.01)*

(86) International application number:
**PCT/CN2011/083687**

(87) International publication number:
**WO 2012/075953 (14.06.2012 Gazette 2012/24)**

(54) **METHODS AND DEVICES FOR DATA MEASUREMENT**

VERFAHREN UND VORRICHTUNGEN ZUR DATENMESSUNG

PROCÉDÉS ET DISPOSITIFS PERMETTANT UNE MESURE DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2010 CN 201010579179**

(43) Date of publication of application:
**25.09.2013 Bulletin 2013/39**

(73) Proprietor: **Huawei Technologies Co., Ltd.
Longgang District
Shenzhen, Guangdong 518129 (CN)**

(72) Inventor: **YU, Yinghui
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
WO-A1-2010/019803    WO-A2-2009/045070
US-A1- 2009 270 103    US-A1- 2010 167 660

- **MEETING SECRETARY: "Report of the 3GPP TSG RAN WG4 meeting number 43bis (Orlando, Florida, USA; 25 - 29 June 2007))", 3GPP DRAFT; R4-071240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Athens, Greece; 20070813, 13 August 2007 (2007-08-13), XP050177701, [retrieved on 2007-08-13]**
- **NORTEL NETWORKS ET AL.: '3GPP2 1xRTT Measurement reports and control' 3GPP TSG-RAN WG 2 MEETING #59, R2-073578 24 August 2007, ATHENS, GREECE,**
- **ERICSSON ET AL.: 'Gap handling for CDMA2000 measurements' 3GPP TSG-RAN WG2 #59-BIS, TDOC R2-074099 12 October 2007, SHANGHAI, CHINA,**
- **QUALCOMM EUROPE: 'Uplink channel measurements in neighboring cells' 3GPP TSG-RAN WG2 #58BIS, R2-072601 29 June 2007, ORLANDO, FLORIDA USA,**

## Description

### TECHNICAL FIELD

The present invention relates to the field of communications, and in particular, to a data measurement method, and devices.

### BACKGROUND

In a frequency division duplex (FDD) system, a downlink (DL) frequency band and an uplink (UL) frequency band usually use the same bandwidth; however, at present, traffic over the uplink and downlink frequency bands is unbalanced. Traffic over the DL frequency band is greater than that over the UL frequency band, which leads to that a UL resource of the UL frequency band is relatively idle. In addition, in a case that the UL traffic matches the DL traffic, UL spectrum efficiency is greater than DL spectrum efficiency, which makes a utilization rate of a UL subframe greater than that of a DL subframe and leads to UL resource redundancy.

To use a UL redundant resource effectively, partial UL access link resources in a frequency division duplex system can be used as DL access link resources in a time division duplex (TDD) system, which enhances a utilization rate of the UL frequency band of FDD.

When a user equipment (UE) hands over from a base station to a low power node (LPN), if a dynamic spectrum sharing (DSS) technology is not adopted, only a cell with the same frequency as the base station can be deployed at an LPN base station. At an edge of the base station and that of the LPN's FDD cell, interference of a DL control channel may exist.

In a DSS scenario, to reduce interference of a DL control channel on a base station and an LPN, it is recommended to hand over a UE with a TDD capability from the base station to a TDD cell of the LPN. A downlink channel of the base station is in an FDD DL frequency band, but a downlink channel of the TDD cell of the LPN is in an FDD UL frequency band. Therefore, inter-frequency measurement needs to be performed to measure a UE served by the base station.

However, an inter-frequency measurement period is longer than an intra-frequency measurement period. For example, when a measurement bandwidth is 6RB, the inter-frequency measurement period is 480ms, which is 280ms longer than the intra-frequency measurement period. Moreover, inter-frequency measurement requires a UE to stop receiving data from the current cell, so UE performance is affected.

US 2009/0270103 A1 discloses dual-cell or multi-cell Wireless Transmit Receive Units, WTRUs, configured to implement mobility procedures. The WTRU configurations implement methods to optimize and allow mobility for the procedures of cell search and cell reselection measurement reporting and inter-frequency handovers, compressed mode measurements and soft handovers. Hereby, intra-frequency and inter-frequency measurements are performed. A user equipment with two receivers receives a measurement control message from a base station and starts to perform the measurements upon reception of the message. WO 2010/019803 A1 discloses systems and methods that facilitate the providing of frequent secondary carrier measurement reports in multicarrier wireless communications.

### SUMMARY

The invention is defined by independent claims 1, 4, 6 and 8. In the following, parts of the description and drawings referring to embodiments which are not covered by the claims are not presented as embodiments of the invention, but as examples useful for understanding the invention. Embodiments of the present invention provide measurement methods, a user equipment and a base station, which can reduce an impact brought by a measurement process to UE performance.

An embodiment of the present invention provides a measurement method, according to claim 1.

An embodiment of the present invention provides a measurement method, according to claim 4.

An embodiment of the present invention provides a user equipment, according to claim 6.

An embodiment of the present invention provides a base station, according to claim 8.

An example useful for understanding the present invention provides a communication system, including: a user equipment and a base station.

From the preceding technical solution, it can be seen that the embodiments of the present invention have the following advantages:

In the embodiments of the present invention, a UE may receive measurement control information from a base station. The measurement control information includes frequency information of a virtual intra-frequency cell. After receiving the measurement control information sent by the base station, the UE may directly start a second receiver that is on a non-working frequency band to perform virtual intra-frequency measurement on the virtual intra-frequency cell. At this time, the UE performs intra-frequency measurement. Because efficiency of the intra-frequency measurement is much higher than that of inter-frequency measurement, an impact of a measurement process on UE performance can be reduced.

## BRIEF DESCRIPTION OF DRAWINGS

FIG. 1 is a schematic diagram of an embodiment of a data measurement method according to the present invention;
FIG. 2 is a schematic diagram of another embodiment of a data measurement method according to the present invention;
FIG. 3 is a schematic diagram of another embodiment of a data measurement method according to the present invention;
FIG. 4 is a structural schematic diagram of a receiver in a user equipment according to the present invention;
FIG. 5 is a schematic diagram of a cell handover according to the present invention;
FIG. 6 is a schematic diagram of an example of a data measurement method not covered by the present invention;
FIG. 7 is a schematic diagram of another example of a data measurement method not covered by the present invention;
FIG. 8 is a schematic diagram of another example of a data measurement method not covered by the present invention;
FIG. 9 is a schematic diagram of uplink public symbol setting;
FIG. 10 is a schematic diagram of path loss measurement;
FIG. 11 is a structural schematic diagram of an embodiment of a user equipment according to the present invention;
FIG. 12 is a schematic diagram of an embodiment of a base station according to the present invention;
FIG. 13 is a schematic diagram of an example of a serving base station;
FIG. 14 is a schematic diagram of an example of a measurement base station;
FIG. 15 is a schematic structural diagram of an example of a communication system; and
FIG. 16 is a schematic structural diagram of an example of a communication system not covered.

## DESCRIPTION OF EMBODIMENTS

An embodiment of the present invention provides a data measurement method, a communication system, and a device, which can reduce an impact brought by a measurement process to UE performance.

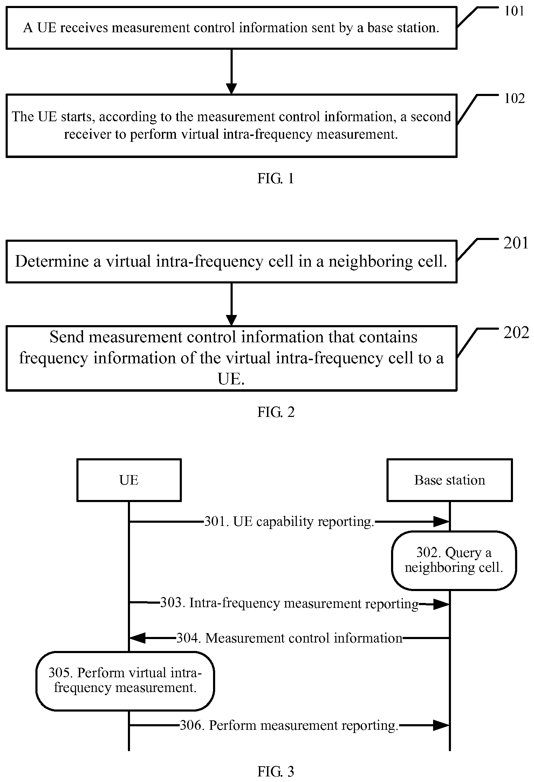

Referring to FIG. 1, an embodiment of a data measurement method according to the present invention includes: 101: A UE receives measurement control information sent by a base station.

In this embodiment, after the UE establishes a network connection with the base station, if the UE has an extra second receiver besides a first receiver that transmits data currently, the UE may receive the measurement control information from the base station. The measurement control information includes frequency information of a virtual intra-frequency cell. The virtual intra-frequency cell is a cell on a frequency layer corresponding to the second receiver of the UE. The second receiver is used for measurement only, but not for data receiving measurement.

It should be noted that, in an actual application, before receiving the measurement control information from the base station, the UE may also report its own UE capability information to the based station according to a request from the base station, or the UE may also actively report UE capability information to the base station.

The UE capability information includes a mode supported by the UE, such as TDD and/or FDD, configuration information of a working sender and receiver of the UE, such as a power frequency band or working frequency. Detailed content included in the UE capability information is common knowledge for those skilled in the art and is not limited herein.

In this embodiment, if each UE's capability information is preset in the base station, the UE may not report capability information.

After the base station obtains UE capability information, if the UE capability information indicates that the UE has at least two receivers, it is triggered to send the measurement control information that includes the frequency information of the virtual intra-frequency cell to the UE.

In an actual application, in a cell where the UE currently stays, the UE receives data through a first receiver, and at the same time, measures signal quality in the current cell through the first receiver. If the signal quality in the cell where the UE currently stays satisfies a first preset condition, the UE may report a measurement report of the current cell to the base station, informing the base station that a signal in the current cell has been degraded and intra-frequency or inter-frequency neighboring cell measurement needs to be started.

In this embodiment, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

When receiving the measurement report of the current cell sent by the UE, the base station may send the measurement control information to the UE, or the base station may measure, by itself, the signal quality in the cell where the UE stays, and when the signal quality satisfies the first preset condition, send the measurement control information to the UE.

102: The UE starts, according to the measurement control information, the second receiver to perform virtual intra-frequency measurement.

After receiving the measurement control information sent by a base station, the UE may start, according to the frequency information of the virtual intra-frequency cell, the second receiver that is in a non-working state in the UE to perform virtual intra-frequency measurement on the virtual intra-frequency cell.

In this embodiment, the UE may receive measurement control information from the base station. The measurement control information includes the frequency information of the virtual intra-frequency cell. After receiving the measurement control information sent by the base station, the UE may directly start the second receiver that is on a non-working frequency band to perform the virtual intra-frequency measurement on the virtual intra-frequency cell. At this time, the UE performs intra-frequency measurement. Because efficiency of the intra-frequency measurement is much greater than that of inter-frequency measurement, an impact of a measurement process on UE performance can be reduced.

The data measurement method in the embodiment of the present invention is described above from the perspective of the UE. In the following, a data measurement method in an embodiment of the present invention is described from the perspective of a base station. Referring to FIG. 2, another embodiment of the data measurement method according to the present invention includes:

201: Determine a virtual intra-frequency cell in a neighboring cell.

In this embodiment, after a base station establishes a network connection with a UE, if analysis shows that the UE has an extra second receiver besides a first receiver that transmits data currently, a virtual intra-frequency cell can be determined in a neighboring cell of the base station, specifically:

Each base station has a communication interface. When a communication network is established, base stations notify each other of their respective working frequency bands or frequency information. Therefore, according to the working frequency bands or frequency information, the base station may query a neighboring cell in the same frequency as the UE's second receiver that is not for receiving data, and takes the cell as the virtual intra-frequency cell.

In an actual application, after the network connection is established between the UE and the base station, a network side may query UE capability information from the UE. When receiving the query from the network side, the UE may report its own capability information to the base station, or the UE may actively initiate reporting of UE capability to the network side. In this way, the base station can receive the UE capability information reported by the UE.

It should be noted that the UE capability information includes a mode supported by the UE, such as TDD and/or FDD, configuration information of a working sender and receiver of the UE, such as a power frequency band or working frequency. Detailed content included in the UE capability information is common knowledge for those skilled in the art and is not limited herein.

In this embodiment, if each UE's capability information is preset in the base station, the UE may not report capability information.

202: Send measurement control information that includes frequency information of the virtual intra-frequency cell to the UE.

After determining the virtual intra-frequency cell, the base station may send the measurement control information that includes the virtual intra-frequency cell to the UE.

The measurement control information is used to instruct the UE to start, according to the frequency information of the virtual intra-frequency cell, the second receiver that is in a non-working state in the UE to perform virtual intra-frequency measurement on the virtual intra-frequency cell.

It should be noted that, in a cell where the UE stays, the UE receives data through the first receiver, and at the same time, measures signal quality in the current cell through the first receiver. If the signal quality in the cell where the UE currently stays satisfies a first preset condition, the UE may report a measurement report of the current cell to the base station, informing the base station that a signal in the current cell has been degraded and intra-frequency or inter-frequency neighboring cell measurement needs to be started.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

When receiving the measurement report of the current cell sent by the UE, the base station may send the measurement control information to the UE, or the base station may measure, by itself, the signal quality in the cell where the UE stays, and when the signal quality satisfies the first preset condition, send the measurement control information to the UE.

In this embodiment, the base station may send the measurement control information to the UE. The measurement control information includes the frequency information of the virtual intra-frequency cell. After receiving the measurement control information sent by the base station, the UE may directly start the second receiver that is on a non-working frequency band to perform virtual intra-frequency measurement on the virtual intra-frequency cell. At this time, the UE performs intra-frequency measurement. Because efficiency of the intra-frequency measurement is much greater than that of inter-frequency measurement, an impact of a measurement process on UE performance can be reduced.

To facilitate understanding, the following describes the data measurement method of the present invention in details. Referring to FIG. 3, another embodiment of the data measurement method according to the present invention includes:

301: A UE reports UE capability information to a base station.

In this embodiment, after a network connection is established between the UE and the base station, a network side may query the UE capability information from the UE. When receiving the query from the network side, the UE reports its own capability information to the base station so that the base station can receive the UE capability information reported by the UE, or the UE may actively report its own capability to the network side.

It should be noted that the UE capability information includes a mode supported by the UE, such as TDD and/or FDD, configuration information of a working sender and receiver of the UE, such as a power frequency band or working frequency. Detailed content included in the UE capability information is common knowledge for those skilled in the art and is not limited herein.

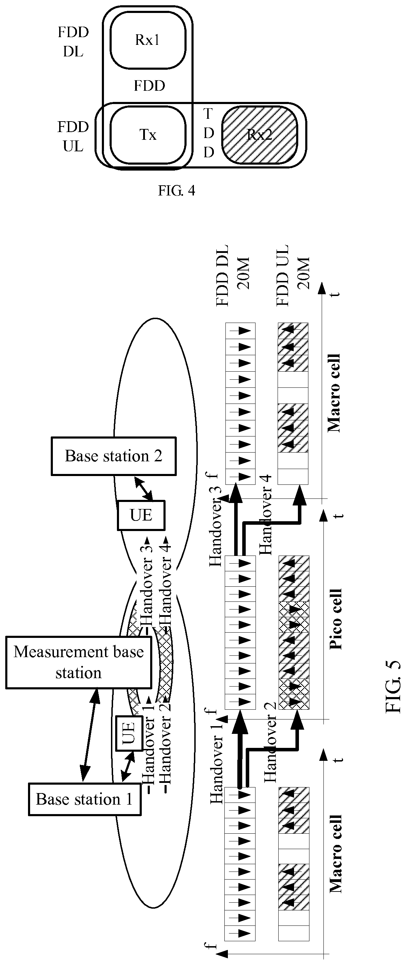

A schematic diagram of a UE may be shown in FIG. 4. Referring to FIG. 4, the UE has two receivers, Rx1 and Rx2.

Rx1 is on an FDD DL frequency band and Rx2 on an FDD UL frequency band. The FDD UL and DL frequency bands are far from each other, so sending on a UL frequency band does not interfere with receiving on a DL frequency band. A time division multiplexing manner is adopted between transceivers on the FDD UL frequency band to achieve a goal of interference prevention.

The two receivers introduced above are on the FDD DL frequency band and FDD UL frequency band. It can be understood that besides the preceding manner, in an actual application, if the UE has two receivers, and an interval between the two receivers is great, the UE may also perform virtual intra-frequency cell measurement in this embodiment, for example, if a range of the FDD DL or UL frequency band is large, the UE's two receivers may also be on the FDD DL frequency band together or on the FDD UL frequency band together, as long as the interval between the two receivers is large.

302: Query a neighboring cell.

In this embodiment, after the base station established the network connection with the UE, if analysis shows that the UE has an extra second receiver besides a first receiver that transmits data currently, the virtual intra-frequency cell may be determined in the neighboring cell of the base station, specifically:

Each base station has a communication interface. When a communication network is established, base stations notify each other of their respective working frequency bands or frequency information. Therefore, according to the working frequency bands or frequency information, the base station may query a neighboring cell in the same frequency as the UE's second receiver that is not for receiving data, and takes the cell as the virtual intra-frequency cell.

303: The UE reports an intra-frequency measurement result to the base station.

In a cell where the UE stays, the UE receives data through the first receiver and at the same time, measures signal quality in the current cell through the first receiver. If the signal quality in the cell where the UE currently stays satisfies a first preset condition, the UE may report a measurement report of the current cell to the base station, informing the base station that a signal in the current cell has been degraded and intra-frequency or inter-frequency neighboring cell measurement needs to be started.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also set according to an actual situation, which is not limited herein.

In this embodiment, the same mechanism is adopted to start virtual cell measurement as a mechanism for starting the intra-frequency or inter-frequency cell measurement. For example, measurement of a receiver used for virtual cell measurement is started by an intra-frequency measurement event of a receiver that receives data, namely, a measurement event of a current service cell.

304: The base station sends measurement control information to the UE.

After the UE reports the measurement report of the cell where the UE currently stays to the base station, the base station may send the measurement control information to the UE. The measurement control information is used to instruct the UE to start, according to a frequency information of the virtual intra-frequency cell, the second receiver that is in a non-working state in the UE to perform virtual intra-frequency measurement on the virtual intra-frequency cell.

In this embodiment, the measurement control information sent by the base station to the UE includes the frequency information of the virtual intra-frequency cell, and further includes period information of virtual intra-frequency measurement and/or measurement time of each measurement period.

It should be noted that, the period information of the virtual intra-frequency measurement and/or measurement time of each measurement period may be as follows specifically:

(1) According to a performance requirement of intra-frequency measurement, the measurement is started once every 200 ms, and measurement time within the 200 ms is determined by the UE's performance, such as 2 ms, 4 ms, or 6 ms;

(2) According to a performance requirement of intra-frequency measurement in a case of using discontinuous reception (DRX), the measurement period of the intra-frequency measurement is determined according to DRX configuration on another receiver. The measurement time of each measurement period is determined by the UE's performance, such as 2 ms, 4 ms, or 6 ms;

(3) According to a timeslot (Gap) configuration manner for inter-frequency measurement on another receiver, the measurement period of the virtual intra-frequency measurement is determined, such as performing measurement lasting 6 ms every 40 ms or 80 ms.

(4) On another receiver, a new DRX period is set for the measurement. According to the DRX period, the measurement period of the virtual intra-frequency measurement is determined. The measurement time of each measurement period is determined by the UE's performance, such as 2 ms, 4 ms, or 6 ms; in this case, DRX configuration includes the DRX period, measurement time of each measurement period, but does not include a timer used for data transmission, such as activation timer and retransmission timer.

It should be noted that, if corresponding manners already exist for the preceding manners for determining the period information of the virtual intra-frequency measurement and/or measurement time of each measurement period, for example, in a released protocol or specification already having definitions, an index of a manner may also be notified, such as measurement configuration 1 or measurement configuration N. An identifier used for indicating the measurement period of the virtual intra-frequency measurement and/or measurement time in each measurement period may be included in the measurement control information, such as an index of a manner. If there is only one option, the period information of the virtual intra-frequency measurement and/or measurement time of each measurement period does not need to be indicated in signaling.

Configuration manners of period information of the virtual intra-frequency measurement and/or measurement time of each measurement period are illustrated by preceding examples. In an actual application, other manners may also be used to determine the period information of the virtual intra-frequency measurement and/or measurement time of each measurement period, which are not specifically limited herein.

305: Perform the virtual intra-frequency measurement.

After receiving the measurement control information sent by the base station, the UE may measure the virtual intra-frequency cell according to the frequency information of the virtual intra-frequency cell, the period information of the virtual intra-frequency measurement, and/or the measurement time of each measurement period.

If the measurement control information includes the identifier used for indicating the measurement period of the virtual intra-frequency measurement and/or the measurement time in each measurement period, the UE needs to query a corresponding measurement period and/or corresponding measurement time from preset correspondence according to the identifier. The UE starts the second receiver according to the frequency information, so that the second receiver performs the virtual intra-frequency measurement on the virtual intra-frequency cell according to queried measurement period and/or measurement time.

For ease of describing a measurement process, refer to FIG. 5. In FIG. 5, for a UE with a second receiver, which is a UE with an extra TDD receiving capability in the present invention, to prevent interference of an uplink receiving channel, its handover path is: a handover from base station 1 to a measurement base station is "Handover 2" and a handover from the measurement base station to base station 2 is "Handover 4".

For a UE with or without a second receiver, which is a UE without an extra TDD receiving capability in the present invention and examples, its handover path is: a handover from base station 1 to the measurement base station is "Handover 1" and a handover from the measurement base station to base station 2 is "Handover 3".

In measurement before "Handover 2", the UE may start the receiver Rx2 on the FDD UL frequency band to perform intra-frequency measurement on a measurement base station cell. The receiver working on the FDD DL frequency band is a receiver Rx1, and measurement on a neighboring cell in the same frequency as the receiver Rx1 is called intra-frequency measurement. The receiver Rx2 working on the FDD UL frequency band is used for the intra-frequency measurement only, but not for data receiving. Measurement on a cell in the same frequency as the receiver Rx2 is called virtual intra-frequency measurement.

In measurement before "Handover 4", the UE may start the receiver Rx1 on the FDD DL frequency band to perform intra-frequency measurement on an FDD cell under a base station eNB2. A receiver working on the FDD UL is the receiver Rx2, and measurement on a neighboring cell in the same frequency as the receiver Rx2 is called intra-frequency measurement. The receiver Rx1 working on the FDD DL frequency band is used for the intra-frequency measurement only, but not for data receiving. Measurement on a cell in the same frequency as the receiver Rx1 is called virtual intra-frequency measurement.

306: The UE performs measurement reporting to the base station.

According to the measurement control information received by the UE, the UE starts the second receiver that is on a non-working frequency band, namely, a virtual intra-frequency measurement receiver, to perform the virtual intra-frequency measurement. When a virtual intra-frequency measurement result shows that when signal quality of the virtual intra-frequency cell satisfies a second preset condition, sends a measurement report of the virtual intra-frequency measurement to the base station.

It should be noted that, that the signal quality satisfies the second preset condition may be a preset condition that corresponds to a measurement event for a handover, for example: signal power is equal to or greater than a preset threshold value, or a bit error rate is less than or equal to a preset threshold value. A specific condition may also be set according to an actual situation, which is not limited herein.

After the UE reports the measurement report of the virtual intra-frequency measurement to the base station, the base station makes a handover decision according to the measurement report of the virtual intra-frequency measurement. A specific deciding manner is common knowledge for those skilled in the art and is not limited herein.

In this embodiment, the UE may receive the measurement control information from the base station. The measurement control information includes the frequency information of the virtual intra-frequency cell. After receiving the measurement control information sent by the base station, the UE may directly start a receiver that is on a non-working frequency band to perform virtual intra-frequency measurement on the virtual intra-frequency cell. At this time, the UE performs intra-frequency measurement. Because efficiency of the intra-frequency measurement is much greater than that of inter-frequency measurement, an impact of a measurement process on UE performance can be reduced.

This embodiment may also apply to any scenario, in addition to the preceding DSS scenario, where the UE has an extra receiver which can perform measurement.

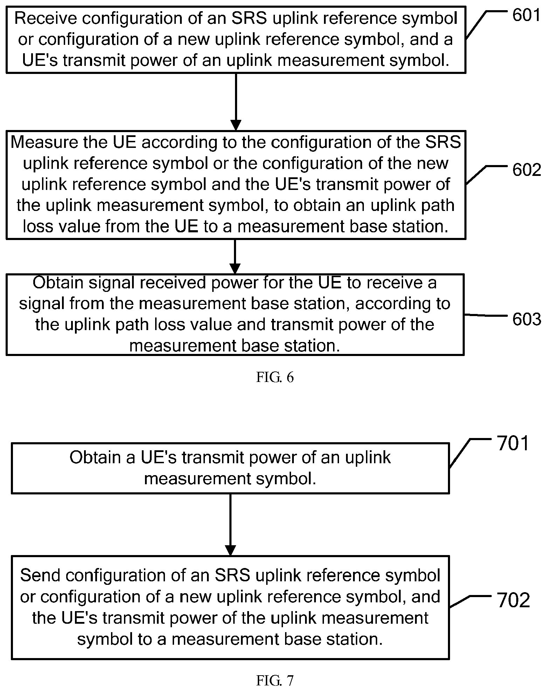

In the preceding embodiment, the UE may perform the intra-frequency measurement. Because the efficiency of the intra-frequency measurement is much greater than that of inter-frequency measurement, the impact on the UE performance brought by the measurement process can be reduced. In an actual application, besides that the UE performs the intra-frequency measurement to reduce the impact of the measurement process on UE performance, the UE may also be replaced with another network element to perform the measurement so as to reduce the impact on the UE performance brought by the measurement process. For the details, refer to FIG. 6. An example of the data measurement method not covered by the present invention includes:

601: A measurement base station receives configuration of an SRS uplink reference symbol or configuration of a new uplink reference symbol, and a UE's transmit power of an uplink measurement symbol, which are sent by a serving base station. A SRS (sounding reference signal) is a kind of uplink reference symbol.

The measurement base station may receive, from the serving base station, the configuration of the SRS uplink reference symbol or the configuration of the new uplink reference symbol, and the UE's transmit power of the uplink measurement symbol. These parameters are all calculated or obtained and then sent to the measurement base station by the serving base station.

In this example, the measurement base station may also obtain measurement configuration information for measuring the UE. It can be understood that the measurement configuration information may also be preconfigured on the measurement base station, and a specific manner is not limited herein.

In this example, the measurement base station is a base station neighboring to the serving base station. The measurement base station may be a low power node base station, and may also be a macro base station, or a base station of another type, which is not specifically limited herein.

602: The measurement base station measures the UE according to the configuration of the SRS uplink reference symbol or the configuration of the new uplink reference symbol, and the UE's transmit power of the uplink measurement symbol, to obtain an uplink path loss value from the UE to a measurement base station.

In this example, after obtaining the configuration of the SRS uplink reference symbol or the configuration of the new uplink reference symbol, and the UE's transmit power of the uplink measurement symbol, the measurement base station may measure the UE according to these parameters, to obtain the uplink path loss value from the UE to the measurement base station. Specifically, the following manner may be adopted:

The measurement base station obtains the UE's receive power on a reference symbol by measuring the SRS uplink reference symbol according to the configuration of the SRS uplink reference symbol, or by measuring the new uplink reference symbol according to the configuration of the new uplink reference symbol.

Afterwards, the measurement base station obtains level three receive power by performing level three filtering on the receive power on the reference symbol.

Then, the measurement base station uses a difference between the UE's transmit power of the uplink measurement symbol received from the serving base station and the level three receive power, as the uplink path loss value from the UE to the measurement base station.

It should be noted that, in an actual application, another manner may be used to calculate the uplink path loss value from the UE to the measurement base station, a specific process of which is not limited herein.

603: The measurement base station obtains, according to the uplink path loss value from the UE to the measurement base station and transmit power of the measurement base station, signal receive power (RSRP) for the UE to receive a signal from the measurement base station.

After the measurement base station calculates and obtains the uplink path loss value from the UE to the measurement base station, the measurement base station may calculate the RSRP of the UE according to the transmit power of the measurement base station and the uplink path loss value, so as to complete uplink measurement on the UE.

Specifically, a difference between the transmit power of the measurement base station and the uplink path loss value may be used as the RSRP of the UE.

In this example, the measurement base station may receive, from the base station, the configuration of the SRS uplink reference symbol or the configuration of the new uplink reference symbol, and the UE's transmit power of the uplink measurement symbol, and use these parameters to measure the UE's uplink signal, so as to obtain the uplink path loss value from the UE to the measurement base station. The measurement base station may obtain, according to the path loss and the transmit power of the measurement base station, the signal receive power for the UE to receive the signal from the measurement base station. Therefore, the UE does not need to perform measurement by itself, which can reduce an impact of a measurement process on UE performance.

The data measurement method in the example is described above from the perspective of the measurement base station. In the following, a data measurement method in an example is described from the perspective of a serving base station. Referring to FIG. 7, another example of the data measurement method includes:

701: Obtain a UE's transmit power of an uplink measurement symbol.

In this embodiment, a serving base station may obtain the UE's transmit power of the uplink measurement symbol in the following manner:

determining the UE's transmit power of the uplink measurement symbol according to PEMAX_H and PPowerClass; or receiving a measurement result and a power headroom report that are sent by the UE, and determining the UE's transmit power of the uplink measurement symbol according to the measurement result and the power headroom report; where

the PEMAX_H is the value of a maximum transmit power parameter IE P-Max broadcast in a system message, and the PPowerClass is 23dBm.

It can be understood that, in an actual application, the serving base station may also obtain the UE's transmit power of the uplink measurement symbol in another manner, which is not specifically limited herein.

702: Send configuration of an SRS uplink reference symbol or configuration of a new uplink reference symbol, and the UE's transmit power of an uplink measurement symbol to a measurement base station, so that the measurement base station calculates RSRP of the UE.

After obtaining the UE's transmit power of an uplink measurement symbol, the serving base station can send preset configuration of an SRS uplink reference symbol or configuration of a new uplink reference symbol, and the UE's obtained transmit power of the uplink measurement symbol to the measurement base station, so that the measurement base station calculates the RSRP of the UE according to the configuration of the SRS uplink reference symbol or the configuration of the new uplink reference symbol, the UE's transmit power of the uplink measurement symbol and transmit power of the measurement base station, so as to replace the UE to complete a measurement process.

In this example, the serving base station may also send measurement configuration information for measuring the UE to the measurement base station.

In this example, the serving base station may send the configuration of the SRS uplink reference symbol or the configuration of the new uplink reference symbol, or the measurement configuration information for measuring the UE, and the UE's transmit power of the uplink measurement symbol to the measurement base station, so that the measurement base station can measure the UE's uplink signal by using these parameters. Therefore, the UE does not need to perform measurement by itself, which can reduce an impact of the measurement process on UE performance.

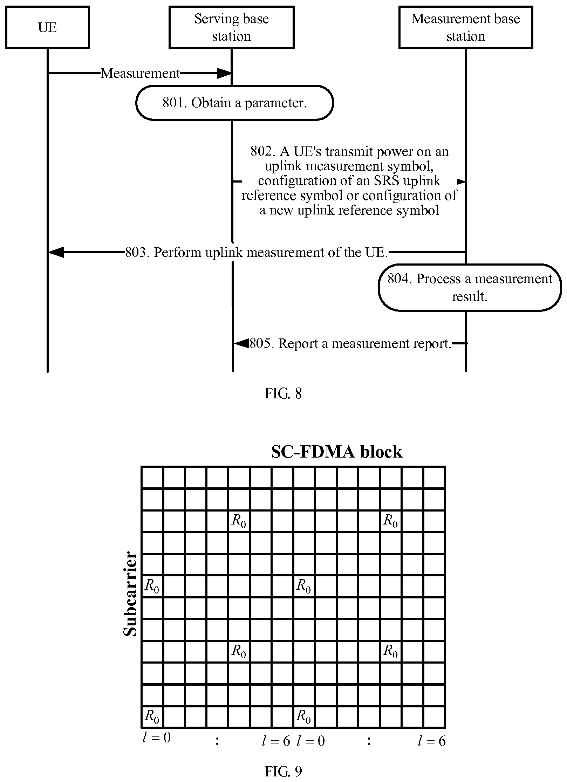

To facilitate understanding, the following describes the data measurement method in details. Referring to FIG. 8, another example of the data measurement method includes:

801: A serving base station obtains a related parameter.

After establishing a network connection with a UE, the serving base station may start to obtain the related parameter. Specifically the parameter includes:

configuration of an SRS uplink reference symbol, or configuration of a new uplink reference symbol, or configuration for a measurement base station to perform measurement reporting to the serving base station, and the UE's transmit power of a measurement symbol.

The serving base station must obtain the UE's transmit power of a measurement symbol. For the configuration of the SRS uplink reference symbol or the configuration of the new uplink reference symbol, the serving base station may select one of them to obtain. However, for the configuration for the measurement base station to perform measurement reporting to the serving base station may or may not be obtained.

The configuration of the SRS uplink reference symbol refers to bandwidth configuration of a UE pilot symbol of an SRS, subframe configuration of the UE pilot symbol, and SRS reporting configuration;

The configuration of the new uplink reference symbol is used to indicate whether to use an uplink common reference symbol. For design of the new uplink reference symbol, reference may be made to design of a downlink reference symbol, for example, as shown in FIG. 9. In FIG. 9, for a position of a common reference symbol that is newly set on an uplink subframe, reference may be made to a position of a downlink common reference symbol. A reference symbol evenly occupies some resource elements (RE) in an entire PRB, and may be configured on a specified symbol similar to the SRS.

The configuration for the measurement base station to perform measurement reporting to the serving base station refers to content to be reported, such as a measurement satisfaction event of a UE for the measurement base station.

In this example, a base station can only obtain the UE's transmit power of the measurement symbol by performing power control calculation. A power control formula of the base station for the UE's physical uplink shared channel (PUSCH) is:

$$P_{\mathrm{PUSCH}}(i) = \min\{P_{\mathrm{CMAX}}, 10\log_{10}(M_{\mathrm{PUSCH}}(i)) + P_{\mathrm{O\_PUSCH}}(j) + \alpha(j) \cdot PL + \Delta_{\mathrm{TF}}(i) + f(i)\}$$

(formula 1);

$P_{\mathrm{CMAX}}$ is maximum transmit power configured by the UE. It is a value that is selected by the UE from a certain range. $M_{\mathrm{PUSCH}}(i)$ is resource bandwidth assigned by the base station to the UE on subframe i. The resource bandwidth may be represented by the number of resource blocks. Because it is the base station that assigns the resource, this parameter is known by the base station.

$P_{\mathrm{O\_PUSCH}}(j)$ is a power reference value of the PUSCH set by the base station for the UE. Therefore, this value is also known by the base station.

PL is downlink path loss measured by the UE. Unless the UE performs the measurement reporting, the base station cannot know this value.

$\alpha(j)$ is a compensation coefficient with a value range of (0, 0.4, 0.5, 0.6, 0.7, 0.8, 0.9, 1). Uplink path loss compensation can be obtained by multiplying the compensation coefficient by the downlink path loss measured by the UE. This value is set in a system message and notified to the UE by the base station. Therefore, this value is also known by the base station.

$\Delta$TF(i) = 10log10 (2MPR(i)*Ks-1), where, maximum power deduction (MPR) is a current modulation and coding scheme and Ks is a cell-level parameter. MPR and Ks is sent by the base station to the UE through a system message. Therefore, the base station may also obtain these parameters to calculate and obtain $\Delta$TF(i).

f(i) is a closed loop adjustment function. Because the preceding parameters are all open loop power control parameters, to improve accuracy of power control, closed adjustment may be performed through a closed loop adjustment function. The closed loop adjustment function f(i) is a UE-level parameter and is sent by the base station to the UE through a system message. Therefore, the base station can also know this parameter.

In a process of communication between the UE and base station, the UE may report a power headroom report (PHR) to notify the base station of the remaining transmit power of a UE.

A PHR value reported by the UE may be represented by a formula as follows:

$$PH(i) = P_{\mathrm{CMAX}} - \left\{ 10\log_{10}(M_{\mathrm{PUSCH}}(i)) + P_{\mathrm{O\_PUSCH}}(j) + \alpha(j) \cdot PL + \Delta_{\mathrm{TF}}(i) + f(i) \right\}$$ (formula 2)

It can be seen from the preceding formula that, a PHR reports the value of remaining power of the UE on a PUSCH channel.

The power control formula of the base station for the UE's transmit power of the measurement symbol is:

$$P_{\text{SRS}}(i) = \min\{P_{\text{CMAX}},\ P_{\text{SRS\_OFFSET}} + 10\log_{10}(M_{\text{SRS}}) + P_{\text{O\_PUSCH}}(j) + \alpha(j) \cdot PL + f(i)\} \quad \text{(formula 3)}$$

When both transmit power of a data sharing channel and transmit power of an SRS symbol are less than $P_{\text{CMAX}}$, a difference between the transmit power of the SRS and that of the PUSCH channel is:

$$\Delta_{\text{SRS\_PUSCH}} = P_{\text{SRS\_OFFSET}} + 10\log10(M_{\text{SRS}}) - \{10\log10(M_{\text{PUSCH}}(i)) + \Delta_{\text{TF}}(i)\}$$

(formula 4)

Parameter PSRS_OFFSET is a parameter specified by the UE and may be represented by 4 bits. The base station notifies the UE of the parameter. Therefore, the parameter is known by the base station.

MSRS is resource bandwidth assigned by the base station to the SRS on subframe i. The resource bandwidth may be represented by the number of resource blocks. Because it is the base station that assigns the resource, this parameter is known by the base station.

Therefore, the base station can calculate the difference between the transmit power of the SRS and the transmit power of the PUSCH channel with (formula 4).

Therefore, if the base station knows the value of PCMAX of the UE, the base station may know, through the PHR reported by the UE, that current transmit power of the UE's PUSCH is PCMAX-PHR, then the base station may obtain the UE's transmit power of the measurement symbol through the transmit power of the PUSCH.

In this example, the following two manners may be adopted to obtain the value of PCMAX:

1. Determine the value of PCMAX according to MIN{PEMAX_H, PPowerClass}:
The value of PEMAX_H is broadcast in a system message and is known by the base station. The value of PPowerClass is 23dBm and this value is defined in a protocol.
MIN{PEMAX_H, PPowerClass} may be directly used as the value of PCMAX, or MIN {PEMAX_H, PPowerClass}-N (dBm) is used as the value of PCMAX, where N may be any value from zero to eight.
In this embodiment, a relationship between PCMAX and maximum transmit power of PEMAX_H is:

$$\text{PCMAX\_L} - \text{T(PCMAX\_L)} \leq \text{PCMAX} \leq \text{PCMAX\_H} + \text{T(PCMAX\_H)} \quad \text{--- formula 5}$$

PCMAX_L = MIN {PEMAX_H-$\Delta$TC, PPowerClass-MPR-A-MPR-$\Delta$TC} where PEMAX_H is the value of a maximum transmit power parameter IE P-Max broadcast in a system message.
The range of $\Delta$TC is 0 or 1.5dB. PPowerClass is 23dBm, and this value is defined in a protocol. When 16 quadrature amplitude modulation (QAM) is used to perform data modulation, a value range of the MPR is 1 or 2, a range of A-MPR is 1, 2, or 3, and in most cases, the value is 1; and the value of P-Max is (-30..33)dBm.
PCMAX_H = MIN{PEMAX_H, PPowerClass}, where, PEMAX_H is the value of the maximum transmit power parameter IE P-Max broadcast in the system message. PPowerClass is 23dBm, and this value is defined in a protocol.
T(PCMAX) is difference tolerance values of parameter PCMAX_L, PCMAX_H and PEMAX_H. Its range is ±2 or ±4.

It can be seen from the preceding (formula 5) that, the value of PCMAX is between MIN {PEMAX_H, PPowerClass} and {PEMAX_H, PPowerClass}-8dBm. As for an average value, the value of PCMAX may be MIN {PEMAX_H, PPowerClass}-4dBm.
In most cases, the value is between MIN {PEMAX_H, PPowerClass} and MIN {PEMAX_H, PPowerClass}-4dBm. As for an average value, the value of PCMAX may be MIN {PEMAX_H, PPowerClass}-2dBm.
2. Determine the value of PCMAX according to a measurement result reported by the UE in combination with the PHR reported by the UE:
After the UE establishes a connection with a base station, the base station may send measurement control information to the UE. The measurement control information includes measurement control configuration of RSRP and reporting configuration of a measurement report;

The UE may perform the measurement reporting according to an event set by the measurement;

In the cell where the UE stays, the UE receives data through a receiver, and at the same time, measures signal quality in the current cell through the receiver. If the signal quality in the cell where the UE currently stays satisfies a first preset condition, the receiver will report a measurement report of the current cell, informing the base station that a signal in the current cell has been degraded.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

When the UE reports a measurement result of the RSRP, the base station may calculate current downlink path loss (PL) of the UE according to measurement result, and a specific manner is:

$$PL = Tx\_power - RSRP \text{ (formula 6)}$$

Tx_power is downlink transmit power of the base station. The base station broadcasts the downlink transmit power, and both the base station and the UE can know the downlink transmit power. The RSRP is the measurement result reported by the UE, and based on the RSRP, the base station may calculate current path loss of the UE.

The UE reports the value of the PHR, as triggered according to an event or triggered periodically. Alternatively, when the base station has calculated a downlink PL value, the base station triggers the UE to report the value of the PHR.

The RSRP is a measurement result that changes slowly, but the PHR is a value that changes quickly and supports uplink power adjustment of the UE. Therefore, during PHR reporting, it may be assumed that the UE's PL does not change at this time. The base station calculates and obtains the value of PCMAX according to (formula 2) and according to a calculated PL value, the value of the PHR reported by the UE, and other parameters known by the base station.

If the PHR is configured to be reported based on PCMAX, when the UE's PCMAX changes, the UE reports the PHR, and the base station can calculate the UE's PCMAX again.

In the preceding manner, the base station can obtain the UE's maximum transmit power PCMAX, and then the base station can obtain the UE's current transmit power of the PUSCH according to the PHR reported by the UE. Then the base station calculates the transmit power of the SRS according to (formula 4) and the difference between the transmit power of the SRS and the transmit power of the PUSCH.

If the UE uses a new designed uplink common reference symbol to send power, it may be required that transmit power of the uplink common reference symbol is the same as that of the PUSCH. In this way, the base station can directly obtain the transmit power of the uplink common reference symbol according to a PHR report.

802: The serving base station sends related parameters to the measurement base station.

After calculating the related parameters by performing step 801, the base station may send these parameters to the measurement base station, so that the measurement base station may perform uplink measurement on the UE.

The UE's transmit power of the measurement symbol is sent to the measurement base station by the serving base station. For the configuration of the SRS uplink reference symbol or the configuration of the new uplink reference symbol, the serving base station may select and send one of them. The configuration for the measurement base station to perform measurement reporting to the serving base station may or may not be sent.

803: The measurement base station performs uplink measurement on the UE.

When the UE is in a connected state, the serving base station performs uplink SRS measurement to support uplink scheduling. Because SRS scheduling information is statically configured by the serving base station, the measurement base station neighboring to the serving base station may obtain the SRS scheduling configuration, and may perform signal power measurement of an uplink SRS symbol of the UE of the serving base station.

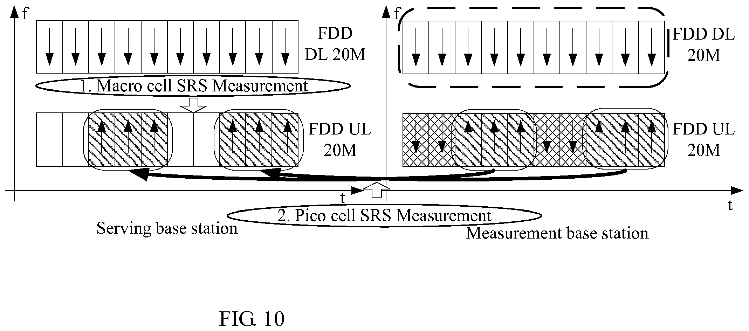

As shown in FIG. 10, the serving base station is a macro base station. SRS measurement performed by the serving base station is normal SRS measurement. SRS measurement of the measurement base station on the serving base station is power detection on an SRS symbol. Then, L3 filtering is performed on detected SRS power, to obtain a measurement result of uplink RSRP, called uplink RSRP.

804: Process a measurement result.

According to the UE's transmit power of the measurement symbol reported by the base station and the UE's uplink RSRP value measured in step 803, the measurement base station subtracts the UE's uplink RSRP value from the UE's transmit power of the measurement symbol to obtain an uplink path loss value from the UE to the measurement base station.

Due to channel reciprocity of a TDD system, the measurement base station subtracts the measured PL value from transmit power of the measurement base station to obtain the UE's RSRP measurement result. In this case, the measurement on the UE is complete.

805: The measurement base station reports the measurement result.

If the RSRP measurement result measured by the measurement base station in step 803 satisfies a measurement reporting condition delivered by the serving base station, the measurement base station reports the UE's RSRP measurement result measured by the measurement base station to the serving base station.

The serving base station may receive a measurement report reported by the measurement base station and make a handover decision according to the current cell's measurement result and the measurement report reported by the measurement base station. A specific process is common knowledge for those skilled in the art and is not limited herein.

It should be noted that in this method, the UE may take a long time to detect a cell for the first time. As a result, before a handover, the UE may be made to search a cell in advance. Before a handover decision, or after a handover decision and before a handover command is sent, the base station may send a cell probing command to the UE so that the UE may perform cell probing first.

In this example, the measurement base station may receive, from the base station, the configuration of the SRS uplink reference symbol or the configuration of the new uplink reference symbol and the UE's transmit power of the uplink measurement symbol, and use these parameters to measure the UE's uplink signal. Therefore, the UE does not need to perform measurement by itself, which reduces an impact of a measurement process on UE performance.

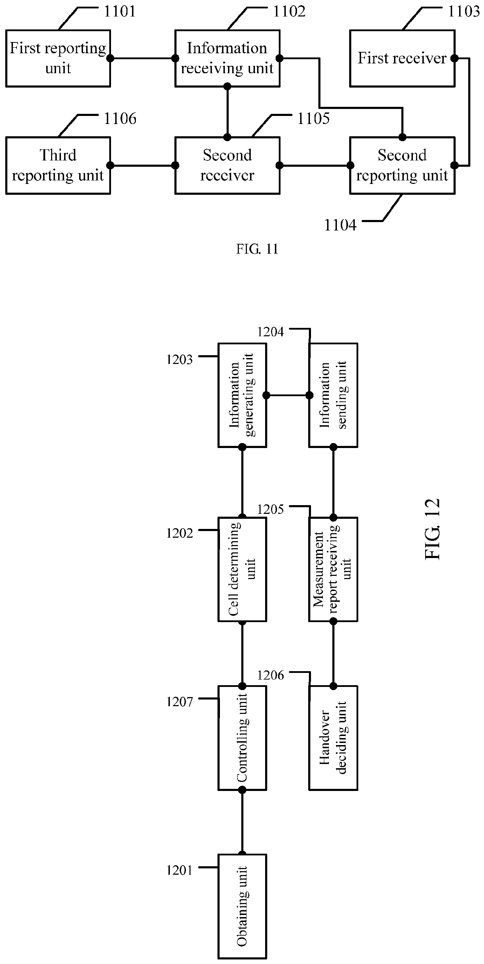

A user equipment in the present invention is described in the following. Referring to FIG. 11, an embodiment of a user equipment according to the present invention includes:

an information receiving unit 1102, configured to receive measurement control information sent by a base station, where the measurement control information includes frequency information of a virtual intra-frequency cell, and the virtual intra-frequency cell is a cell on a frequency layer corresponding to a second receiver of the UE; and
the second receiver 1105, configured to perform virtual intra-frequency measurement according to the measurement control information received by the information receiving unit 1102.

The user equipment in this embodiment may further include:

a first receiver 1103, configured to detect signal quality in a cell where the UE currently stays; and
a second reporting unit 1104, configured to report a measurement report to the base station when the signal quality in the cell where the UE currently stays measured by the first receiver 1103 satisfies a first preset condition.

The user equipment in the embodiment may further include:
a first reporting unit 1101, configured to report UE capability information to the base station, where the UE capability information includes a mode supported by the UE and configuration information of a working frequency band/working frequency of a transmitter and receiver of the UE.

The user equipment in the embodiment may further include:
a third reporting unit 1106, configured to send a measurement report of the virtual intra-frequency measurement to the base station when a virtual intra-frequency measurement result obtained by a second receiver 1105 shows that signal quality in the virtual intra-frequency cell satisfies a second preset condition.

In this embodiment, operations performed by the first reporting unit 1101, the second reporting unit 1104, and the third reporting unit 1106 are all reporting information to the base station. In an actual application, these reporting units may be integrated into one a physical or software module, and may also be implemented as different physical or software modules independently, which is not specifically limited herein.

In this embodiment, the user equipment may receive the frequency information of the virtual intra-frequency cell from the base station and may start the second receiver to perform the virtual intra-frequency measurement. A specific process is the same as that in the description of FIG. 1 and FIG. 3. To facilitate understanding, an interaction relationship between units in the user equipment in this embodiment is described below.

In this embodiment, after the UE establishes a network connection with the base station, a network side may query the UE capability information from the UE. When the UE receives a query from the network side, the first reporting unit 1101 reports its own capability information to the base station.

It should be noted that the UE capability information includes the mode supported by the UE, such as TDD and/or FDD, configuration information of a working sender and receiver of the UE. Detailed content included in the UE capability information is common knowledge for those skilled in the art and is not limited herein.

In the cell where the UE stays, the UE receives data through the first receiver 1103, and at the same time, measures the signal quality in the current cell through the first receiver 1103. If the signal quality in the cell where the UE currently stays satisfies the first preset condition, the second reporting unit 1104 will report a measurement report of the current cell, informing the base station that a signal in the current cell has been degraded.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

After the second reporting unit 1104 reports a measurement report of the current cell, the information receiving unit 1102 may receive the measurement control information from the base station. The measurement control information is used to instruct the UE to perform measurement of another cell.

After receiving the measurement control information from the base station, the information receiving unit 1102 may start, according to the received frequency information of the virtual intra-frequency cell, the second receiver 1105 that is in a non-working state in the UE to perform the virtual intra-frequency measurement on the virtual intra-frequency cell.

In this embodiment, after receiving the measurement control information from the base station, the information receiving unit 1102 may directly start the second receiver 1105 that is on the non-working frequency band to perform the virtual intra-frequency measurement on the virtual intra-frequency cell. At this time, the UE performs intra-frequency measurement. Because efficiency of the intra-frequency measurement is much greater than that of inter-frequency measurement, an impact of a measurement process on UE performance can be reduced.

A base station in the present invention is described in the following. Referring to FIG. 12, an embodiment of the base station includes:

a cell determining unit 1202, configured to determine a virtual intra-frequency cell in a neighboring cell, where the virtual intra-frequency cell is a cell on a frequency layer corresponding to a second receiver of a UE, and the second receiver is used for measurement only, but not used for data receiving;

an information generating unit 1203, configured to generate measurement control information, where the measurement control information includes frequency information of the virtual intra-frequency cell determined by the cell determining unit 1202; and

an information sending unit 1204, configured to send the measurement control information generated by the information generating unit 1203 to the UE, instructing the UE to start, according to the measurement control information, the second receiver to perform virtual intra-frequency measurement.

The base station in this embodiment further includes:

a measurement report receiving unit 1205, configured to receive a measurement report of the virtual intra-frequency measurement reported by a UE; and

a handover deciding unit 1206, configured to make a handover decision according to the measurement report of the virtual intra-frequency measurement.

The base station in this embodiment further includes:

an obtaining unit 1201, configured to obtain UE capability information of the UE, where the UE capability information includes a mode supported by the UE and configuration information of a working frequency band/working frequency of a sender and receiver of the UE; and

a controlling unit 1207, configured to, when the UE capability information obtained by the obtaining unit 1201 indicates that the UE has at least two receivers, trigger the cell determining unit 1202 to perform a corresponding operation.

In this embodiment, the base station may send the frequency information of the virtual intra-frequency cell to the user equipment, so that the UE starts the second receiver to perform the virtual intra-frequency measurement. A specific process is the same as that in the description of FIG. 2 and FIG. 3. To facilitate understanding, an interaction relationship between units in the base station in this embodiment is described below.

In this embodiment, after the UE establishes a network connection with the base station, a network side may query the UE capability information from the UE. When the UE receives a query from the network side, the UE reports its own capability information to the base station. In this way, the obtaining unit 1201 may receive the UE capability information reported by the UE.

It should be noted that the UE capability information includes the mode supported by the UE, such as TDD and/or FDD, configuration information of a working sender and receiver of the UE. Detailed content included in the UE capability information is common knowledge for those skilled in the art and is not limited herein.

After the obtaining unit 1201 obtains the UE capability information, if analysis shows that the UE has an extra second receiver besides a first receiver that transmits data currently, the controlling unit 1207 may trigger the cell determine unit 1202 to determine the virtual intra-frequency cell in the neighboring cell of the base station. Specifically: Each base station has a communication interface. When a communication network is established, base stations notify each other of their respective working frequency bands or frequency information. Therefore, according to the working frequency bands or frequency information, the base station may query a neighboring cell in the same frequency as the UE's second receiver that is not for receiving data, and takes the cell as the virtual intra-frequency cell.

In a cell where the UE stays, the UE receives data through a first receiver, and at the same time, measures signal quality in the current cell through the first receiver. If the signal quality in the cell where the UE currently stays satisfies the first preset condition, the receiver will report a measurement report of the current cell, informing the base station that a signal in the current cell has been degraded.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

After the UE reports the measurement report of the cell where the UE currently stays to the base station, the information generating unit 1203 may generate the measurement control information that carries the frequency information of the virtual intra-frequency cell, and the information sending unit 1204 sends the measurement control information that includes the virtual intra-frequency cell to the UE. The measurement control information is used to instruct the UE to start, according to the frequency information of the virtual intra-frequency cell, the second receiver that is in a non-working state in the UE to perform the virtual intra-frequency measurement on the virtual intra-frequency cell.

In this embodiment, the information sending unit 1204 may send the measurement control information to the UE. The measurement control information includes the frequency information of the virtual intra-frequency cell. After receiving the measurement control information sent by the base station, the UE may directly start the second receiver that is on a non-working frequency band to perform virtual intra-frequency measurement on the virtual intra-frequency cell. At this time, the UE performs intra-frequency measurement. Because efficiency of the intra-frequency measurement is much greater than that of inter-frequency measurement, an impact of a measurement process on UE performance can be reduced.

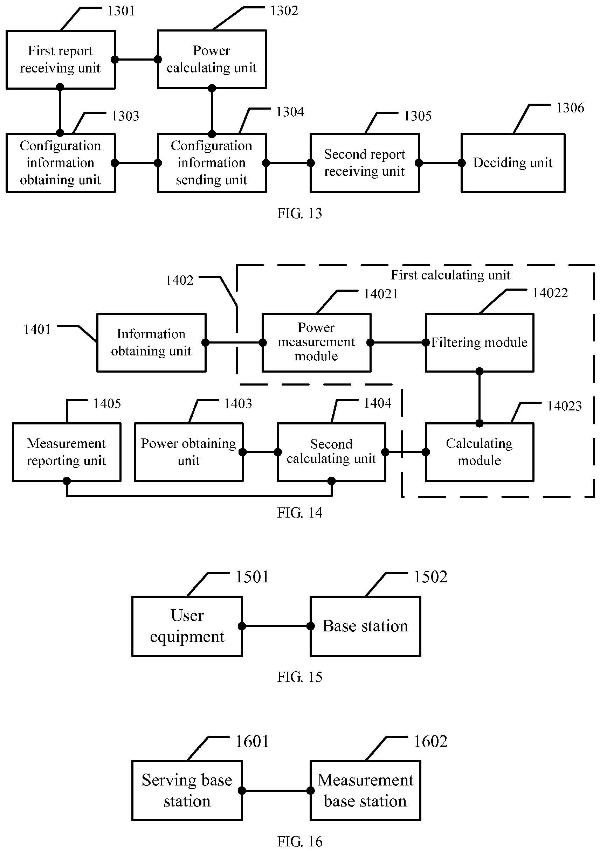

A serving base station is described in the following. Referring to FIG. 13, an example of a serving base station includes

> a power calculating unit 1302, configured to obtain a UE's transmit power of an uplink measurement symbol;
> a configuration information obtaining unit 1303, configured to obtain configuration of an SRS uplink reference symbol or configuration of a new uplink reference symbol; and
> a configuration information sending unit 1304, configured to send the configuration of the SRS uplink reference symbol or the configuration of the new uplink reference symbol obtained by the configuration information obtaining unit 1303 and the UE's transmit power of the uplink measurement symbol obtained by the power calculating unit 1302 to a measurement base station, so that the measurement base station measures signal receive power for the UE to receive a signal from the measurement base station, according to the configuration of the SRS uplink reference symbol or the configuration of the new uplink reference symbol, the UE's transmit power of the uplink measurement symbol, and transmit power of the measurement base station.

The serving base station in the example may further include:

> a second report receiving unit 1305, configured to receive a measurement report reported by the measurement base station according to preset measurement configuration information; and
> a deciding unit 1306, configured to make a handover decision according to the measurement report reported by the measurement base station.

The serving base station in the example may further include:
a first report receiving unit 1301, configured to receive a measurement result of a cell, where the UE currently stays, sent by a user equipment, and trigger the power calculating unit 1302 and the configuration information obtaining unit 1303 to perform corresponding operations.

In this example, operations performed by the first report receiving unit 1301 and the second report receiving unit 1305 are both receiving a measurement report. In an actual application, these report receiving units may be integrated into physical or software module, and may also be implemented as different physical or software modules independently, which is not specifically limited herein.

In this example, the serving base station may send configuration information to the measurement base station, so that the measurement base station may replace the user equipment to perform cell measurement. A specific process is the same as that in the description of FIG. 7 and FIG. 8. To facilitate understanding, an interaction relationship between units in the serving base station in this embodiment is described below.

In the cell where the UE stays, the UE receives data through a receiver, and at the same time, measures signal quality in the current cell through the receiver. If the signal quality in the cell where the UE currently stays satisfies the first preset condition, the first report receiving unit may receive the measurement report of the current cell from the UE, indicating that a signal in the cell has been degraded.

It should be noted that, that the signal quality satisfies the first preset condition may be a preset condition for starting intra-frequency or inter-frequency neighboring cell measurement, for example: signal power is less than a preset threshold value, or a bit error rate is greater than a preset threshold value. A specific condition may also be set according to an actual situation, which is not limited herein.

After the UE sends the measurement report of the cell where the UE currently stays to the base station, the power calculating unit 1302 may calculate the UE's transmit power of the uplink measurement symbol and the configuration information obtaining unit 1303 may obtain the configuration of the SRS uplink reference symbol or the configuration of the new uplink reference symbol. A specific calculation process is similar to that in the description of the embodiment shown in FIG. 8 and is not repeated here.

After obtaining the UE's transmit power of the uplink measurement symbol and the configuration of the SRS uplink reference symbol or the configuration of the new uplink reference symbol, the configuration information sending unit 1304 can send preset configuration of the SRS uplink reference symbol or configuration of the new uplink reference symbol, and UE's calculated transmit power of the uplink measurement symbol to the measurement base station, so that the measurement base station calculate the UE's RSRP so as to replace the UE to complete a measurement process.

In this example, the configuration information sending unit 1304 may send the configuration of the SRS uplink reference symbol or the configuration of the new uplink reference symbol and the UE's transmit power of the uplink measurement symbol to the measurement base station, so that the measurement base station can use these parameters to measure the UE's uplink signal. Therefore, the UE does not need to perform measurement by itself, which reduces the impact of the measurement process on UE performance.

A measurement base station in the present invention is described in the following. Referring to FIG. 14, an example of a measurement base station includes:

an information obtaining unit 1401, configured to obtain configuration of an SRS uplink reference symbol or configuration of a new uplink reference symbol, and a UE's transmit power of an uplink measurement symbol, which are sent by a serving base station;

a first calculating unit 1402, configured to measure the UE according to the obtained configuration of the SRS uplink reference symbol or configuration of the uplink reference symbol, and the UE's transmit power of an uplink measurement symbol, which are obtained by the information obtaining unit 1401, to obtain an uplink path loss value from the UE to the measurement base station;

a power obtaining unit 1403, configured to obtain transmit power of the measurement base station; and

a second calculating unit 1404, configured to calculate signal receive power for the UE to receive a signal from the measurement base station, according to the uplink path loss value calculated and obtained by the first calculating unit 1402 and the transmit power of the measurement base station obtained by the power obtaining unit 1403.

In this example, the first calculating unit 1402 includes:

a power measurement module 14021, configured to obtain the UE's receive power on a reference symbol by measuring the SRS uplink reference symbol according to the configuration of the SRS uplink reference symbol obtained by the information obtaining unit 1401, or by measuring the new uplink reference symbol according to the configuration of the new uplink reference symbol;

a filtering module 14022, configured to perform level three filtering on the receive power on the reference symbol obtained by the power measurement module 14021, to obtain the level three receive power; and

a calculating module 14023, configured to use a difference between the UE's transmit power of the uplink measurement symbol obtained by the information obtaining unit 1401 and the level three receive power obtained by the filtering module 14022, as the uplink path loss value from the UE to the measurement base station.

The measurement base station in the example may further include:

a measurement reporting unit 1405, configured to, when the signal receive power for the UE to receive a signal from the measurement base station calculated and obtained by the second calculating unit 1404 satisfies a preset condition, report, to the serving base station according to preset measurement configuration information, a measurement report that includes the signal receive power for the UE to receive a signal from the measurement base station.

In this example, the measurement configuration information may be received from the serving base station, and may also be locally preconfigured on the measurement base station, which is not specifically limited herein.

In this embodiment, operations performed by the first calculating unit 1402 and the second calculating unit 1404 are both calculating. In an actual application, these calculating units may be integrated into one physical or software module, and may also be implemented as different physical or software modules independently, which is not specifically limited herein.

In this example, the measurement base station may obtain configuration information from the serving base station, so as to be capable of replacing the user equipment to perform cell measurement. A specific process is the same as that in the description of FIG. 6 and FIG. 8. To facilitate understanding, an interaction relationship between units in the measurement base station in this embodiment is described below.

The information obtaining unit 1401 may receive, from a base station, the configuration of the SRS uplink reference symbol or the configuration of the new uplink reference symbol and the UE's transmit power of the uplink measurement symbol. These parameters are all calculated or obtained and then sent to the measurement base station by the base station.

After the information obtaining unit 1401 obtains the configuration of the SRS uplink reference symbol or the configuration of the new uplink reference symbol, the power measurement module 14021 may obtain the UE's receive power on the reference symbol by measuring the SRS uplink reference symbol according to the configuration of the SRS uplink reference symbol, or by measuring the new uplink reference symbol according to the configuration of the new uplink reference symbol.

The filtering module 14022 performs the level three filtering on the receive power on the reference symbol calculated and obtained by the power measurement module 14021, to obtain the level three receive power. Afterward, the calculating module 14023 uses the difference between the UE's transmit power of the uplink measurement symbol obtained by the information obtaining unit 1401 and the level three receive power obtained by the filtering module 14022, as the uplink path loss value from the UE to the measurement base station.

After the uplink path loss value from the UE to a measurement base station is calculated and obtained, the second calculating unit 1404 obtains the signal receive power for the UE to receive a signal from the measurement base station, according to the uplink path loss value and the transmit power of the measurement base station, so as to complete uplink measurement on the UE.

In this example, the information obtaining unit 1401 may receive, from the base station, the configuration of the SRS uplink reference symbol or the configuration of the new uplink reference symbol, and the UE's transmit power of the uplink measurement symbol. A second calculating unit 1404 may use these parameters to measure the UE's uplink signals. Therefore, the UE does not need to perform measurement by itself, which reduces an impact of a measurement process on UE performance.

An example of a communication system is described in the following. Referring to FIG. 15, an example of the communication system includes:

a user equipment 1501 and a base station 1502.

In this example, a specific function, structure, and processing procedure of the user equipment 1501 are similar to those of the user equipment shown in FIG. 11 and are not repeated here.

In this example, a specific function, structure, and processing procedure of the base station 1502 are similar to those of the base station shown in FIG. 12 and are not repeated here.

Referring to FIG. 16, an example of a communication system includes:

a serving base station 1601 and a measurement base station 1602.

In this example, a specific function, structure, and processing procedure of the serving base station 1601 is similar to those of the serving base station shown in FIG. 13 and are not repeated here.

In this example, a specific function, structure, and processing procedure of a measurement base station 1602 is similar to those of the measurement base station shown in FIG. 14 and are not repeated here.

A person skilled in the art may understand that all or part of the steps of the method according to the preceding embodiments may be implemented by a program instructing relevant hardware. The program may be stored in a computer readable storage medium. The storage medium may be a read-only memory, a magnetic disk, an optical disk or the like.

A data measuring method, communication system, and relevant device which are provided by the present invention and examples are introduced in detail above.

**Claims**

1. A data measurement method, comprising:

   Receiving (101), by a user equipment, UE, measurement control information sent from a base station, wherein the measurement control information comprises frequency information of a virtual intra-frequency cell, wherein the virtual intra-frequency cell is a cell on a frequency layer corresponding to a second receiver of the UE, and the second receiver is on a non-working frequency band and is used for measurement only, but not for data receiving; and

Starting (102), by the UE according to the measurement control information, the second receiver to perform virtual intra-frequency measurement, wherein the measurement control information further comprises a measurement period of the virtual intra-frequency measurement and/or measurement time in each measurement period; and

the starting (102), by the UE according to the measurement control information, the second receiver to perform virtual intra-frequency measurement comprises:

starting, by the UE, the second receiver according to the frequency information, so that the second receiver performs the virtual intra-frequency measurement on the intra-frequency cell according to the measurement period and/or measurement time; wherein

before the receiving (101), by the UE, measurement control information sent from a base station, the method comprises:

receiving, by the UE, data through a first receiver, and at the same time, measuring signal quality in the current cell through the first receiver,

if the signal quality in the cell where the UE currently stays satisfies a first preset condition, reporting, by the UE, a measurement report of the current cell to the base station, informing the base station that a signal in the current cell has been degraded and intra-frequency or inter-frequency neighboring cell measurement needs to be started.

2. The method according to claim 1, wherein the measurement period is determined by the base station according to a performance requirement of intra-frequency measurement, a performance requirement of intra-frequency measurement in a case of using discontinuous reception, DRX, a DRX period used in intra-frequency measurement, or a timeslot configuration manner of periodic inter-frequency measurement in the second receiver of the UE; and the measurement time is determined according to the UE's performance.

3. The method according to claims 1 or 2, wherein after the starting (102), by the UE according to the measurement control information, the second receiver to perform virtual intra-frequency measurement, the method comprises: reporting, by the UE, a measurement report of the virtual intra-frequency measurement to the base station when a result of the virtual intra-frequency measurement shows that signal quality of the virtual intra-frequency cell satisfies a second preset condition.

4. A data measurement method performed by a base station, comprising:

determining (201) a virtual intra-frequency cell in a neighboring cell, wherein the virtual intra-frequency cell is a cell on a frequency layer corresponding to a second receiver of a user equipment, UE, and the second receiver is on a non-working frequency band and is used for measurement only, but not used for data receiving; and sending (202) measurement control information that includes frequency information of the virtual intra-frequency cell to the UE, so that the UE starts, according to the measurement control information, the second receiver to perform virtual intra-frequency measurement, further comprising:

determining a measurement period of the virtual intra-frequency measurement according to a performance requirement of intra-frequency measurement, a performance requirement of intra-frequency measurement in a case of using discontinuous reception, DRX, a DRX period used in intra-frequency measurement, or a timeslot configuration manner of periodic inter-frequency measurement in the second receiver of the UE, and determining measurement time in each measurement period according to the UE's performance; and carrying, in the measurement control information, the measurement period of the virtual intra-frequency measurement and/or the measurement time in each intra-frequency measurement, and sending the measurement control information to the UE,

wherein before the sending (202) the measurement control information that includes frequency information of the virtual intra-frequency cell to the UE, the method comprises:

receiving a measurement report reported by the UE; wherein the report is reported when a first receiver of the UE measures that signal quality of a cell where the UE currently stays satisfies a first preset condition, and the first receiver is used for data transmission; or

if the base station determines that signal quality of a cell where the UE currently stays satisfies a first preset condition, triggering the step of sending the measurement control information that comprises the frequency information of the virtual intra-frequency cell to the UE.

5. The method according to claim 4, wherein before the sending (202) the measurement control information that includes frequency information of the virtual intra-frequency cell to the UE, the method comprises:

obtaining UE capability information; and
when the UE capability information indicates that the UE has at least two receivers, triggering the step of sending the measurement control information that includes the frequency information of the virtual intra-frequency cell to the UE.

6. A user equipment, UE, comprising:

an information receiving unit (1102), configured to receive measurement control information sent by a base station, wherein the measurement control information includes frequency information of a virtual intra-frequency cell, and the virtual intra-frequency cell is a cell on a frequency layer corresponding to a second receiver (1105) of the user equipment and the second receiver is on a non-working frequency band and is used for measurement only, but not used for data receiving; and
the second receiver (1105), configured to perform virtual intra-frequency measurement according to the measurement control information received by the information receiving unit (1102) wherein the measurement control information further comprises a measurement period of the virtual intra-frequency measurement and/or measurement time in each measurement period; and
wherein said second receiver (1105) is configured to perform said virtual intra-frequency measurement on the intra-frequency cell according to the measurement period and/or measurement time; and wherein
before the information receiving unit (1102) is adapted to receive measurement control information sent from a base station, the UE is adapted to receive data through a first receiver, and at the same time, to measure signal quality in the current cell through the first receiver, if the signal quality in the cell where the UE currently stays satisfies a first preset condition, a second sending unit (1104) is adapted to report a measurement report of the current cell to the base station, informing the base station that a signal in the current cell has been degraded and intra-frequency or inter-frequency neighboring cell measurement needs to be started.

7. The user equipment according to claim 6, further comprising:
a reporting unit (1106), configured to report a measurement report of the virtual intra-frequency measurement to the base station when a result of the virtual intra-frequency measurement obtained by the second receiver (1105) shows that signal quality in the virtual intra-frequency cell satisfies a second preset condition.

8. A base station, comprising:

a cell determining unit (1202), configured to determine a virtual intra-frequency cell in a neighboring cell, wherein the virtual intra-frequency cell is a cell on a frequency layer corresponding to a second receiver of a user equipment, UE, and the second receiver is on a non-working frequency band and is used for measurement only, but not used for data receiving;
an information generating unit (1203), configured to generate measurement control information, wherein the measurement control information includes frequency information of the virtual intra-frequency cell determined by the cell determining unit (1202); and
an information sending unit (1204), configured to send the measurement control information generated by the information generating unit (1203) to the UE, so that the UE starts, according to the measurement control information, the second receiver to perform virtual intra-frequency measurement,
wherein the base station is further adapted to determine a measurement period of the virtual intra-frequency measurement according to a performance requirement of intra-frequency measurement, a performance requirement of intra-frequency measurement in a case of using discontinuous reception, DRX, a DRX period used in intra-frequency measurement, or a timeslot configuration manner of periodic inter-frequency measurement in the second receiver of the UE and to determine measurement time in each measurement period according to the UE's performance, and wherein the information generating unit (1203) is configured to generate said measurement control information further with the measurement period of the virtual intra-frequency measurement and the measurement time in each measurement period,
wherein before the sending unit (1204) is adapted to send the measurement control information of the virtual intra-frequency cell to the UE the base station is further adapted to receive a measurement report reported by the UE; wherein the report is reported when a first receiver of the UE is adapted to measure that signal quality of a cell where the UE currently stays satisfies a first preset condition, and the first receiver is used for data transmission; or if the base station is adapted to determine that signal quality of a cell where the UE currently stays satisfies a first preset condition, and to trigger sending the measurement control information that comprises the frequency information of the virtual intra-frequency cell to the UE.

9. The base station according to claim 8, further comprising:

an obtaining unit (1201), configured to obtain UE capability information of the UE; and
a controlling unit (1202), configured to, when the UE capability information obtained by the obtaining unit (1201) indicates that the UE has at least two receivers, trigger information sending unit (1204) to send the measurement control information that includes the frequency information of the virtual intra-frequency cell to the UE.

**Patentansprüche**

1. Datenmessverfahren, umfassend:

Empfangen (101), durch ein Benutzergerät, UE, einer Messsteuerungsinformation, die von einer Basisstation gesendet wird, wobei die Messsteuerungsinformation eine Frequenzinformation einer virtuellen Intrafrequenzzelle umfasst, wobei die virtuelle Intrafrequenzzelle eine Zelle in einer Frequenzschicht ist, die einem zweiten Empfänger des UE entspricht, und wobei sich der zweite Empfänger in einem nicht arbeitenden Frequenzband befindet und nur zur Messung, nicht aber zum Datenempfang verwendet wird; und
Starten (102), durch das UE gemäß der Messsteuerungsinformation, des zweiten Empfängers, zur Durchführung einer virtuellen Intrafrequenzmessung, wobei die Messsteuerungsinformation ferner einen Messzeitraum der virtuellen Intrafrequenzmessung und/oder einen Messzeitpunkt in jedem Messzeitraum umfasst; und
wobei das Starten (102), durch das UE gemäß der Messsteuerungsinformation, des zweiten Empfängers zur Durchführung einer virtuellen Intrafrequenzmessung umfasst:

Starten, durch das UE, des zweiten Empfängers gemäß den Frequenzinformationen, sodass der zweite Empfänger die virtuelle Intrafrequenzmessung in der Intrafrequenzzelle gemäß dem Messzeitraum und/oder dem Messzeitpunkt durchführt; wobei
vor dem Empfangen (101), durch das UE, einer Messsteuerungsinformation, die von einer Basisstation gesendet wird, das Verfahren umfasst:

Empfangen, durch das UE, von Daten durch einen ersten Empfänger, und gleichzeitig Messen der Signalqualität in der aktuellen Zelle durch den ersten Empfänger,
wenn die Signalqualität in der Zelle, in der sich das UE aktuell aufhält, eine erste voreingestellte Bedingung erfüllt, Berichten, durch das UE, eines Messberichts der aktuellen Zelle an die Basisstation, der die Basisstation darüber informiert, dass ein Signal in der aktuellen Zelle vermindert wurde und eine Intrafrequenz- oder Interfrequenz-Messung in einer benachbarten Zelle gestartet werden muss.

2. Verfahren nach Anspruch 1, wobei der Messzeitraum durch die Basisstation gemäß einer Leistungsanforderung der Intrafrequenzmessung, einer Leistungsanforderung der Intrafrequenzmessung in einem Fall der Verwendung eines diskontinuierlichen Empfangs, DRX, einem bei der Intrafrequenzmessung verwendeten DRX-Zeitraum oder einer Art der Zeitschlitzkonfiguration einer periodischen Interfrequenzmessung im zweiten Empfänger des UE bestimmt wird; und
der Messzeitpunkt gemäß der Leistung des UE bestimmt wird.

3. Verfahren nach den Ansprüchen 1 oder 2, wobei nach dem Starten (102), durch das UE gemäß der Messsteuerungsinformation, des zweiten Empfängers zur Durchführung der virtuellen Intrafrequenzmessung, das Verfahren umfasst:
Berichten, durch das UE, eines Messbericht der virtuellen Intrafrequenzmessung an die Basisstation, wenn ein Ergebnis der virtuellen Intrafrequenzmessung zeigt, dass die Signalqualität der virtuellen Intrafrequenzzelle eine zweite voreingestellte Bedingung erfüllt.

4. Datenmessverfahren, durchgeführt durch eine Basisstation, umfassend:

Bestimmen (201) einer virtuellen Intrafrequenzzelle in einer benachbarten Zelle, wobei die virtuelle Intrafrequenzzelle eine Zelle in einer Frequenzschicht ist, die einem zweiten Empfänger eines Benutzergeräts, UE, entspricht, und wobei sich der zweite Empfänger in einem nicht arbeitenden Frequenzband befindet und nur zur Messung verwendet wird, nicht aber zum Datenempfang verwendet wird; und

Senden (202) einer Messsteuerungsinformation, die eine Frequenzinformation der virtuellen Intrafrequenzzelle beinhaltet, an das UE, sodass das UE gemäß der Messsteuerungsinformation den zweiten Empfänger zur Durchführung der virtuellen Intrafrequenzmessung startet, ferner umfassend:

Bestimmen eines Messzeitraums der virtuellen Intrafrequenzmessung gemäß einer Leistungsanforderung der Intrafrequenzmessung, einer Leistungsanforderung der Intrafrequenzmessung in einem Fall der Verwendung eines diskontinuierlichen Empfangs, DRX, einem bei der Intrafrequenzmessung verwendeten DRX-Zeitraum oder einer Art der Zeitschlitzkonfiguration einer periodischen Interfrequenzmessung im zweiten Empfänger des UE, und Bestimmen des Messzeitpunkts in jedem Messzeitraum gemäß der Leistung des UE; und

Tragen, in der Messsteuerungsinformation, den Messzeitraum der virtuellen Intrafrequenzmessung und/oder den Messzeitpunkt in jeder Intrafrequenzmessung, und Senden der Messsteuerungsinformation an das UE,

wobei vor dem Senden (202) der Messsteuerungsinformation, die eine Frequenzinformationen der virtuellen Intrafrequenzzelle enthält, an das UE, das Verfahren umfasst:

Empfangen eines Messberichts, der durch das UE berichtet wird; wobei der Bericht berichtet wird, wenn ein erster Empfänger des UE misst, dass die Signalqualität einer Zelle, in der sich das UE aktuell aufhält, eine erste voreingestellte Bedingung erfüllt, und der erste Empfänger zur Datenübertragung verwendet wird; oder

wenn die Basisstation bestimmt, dass die Signalqualität einer Zelle, in der sich das UE aktuell aufhält, eine erste voreingestellte Bedingung erfüllt, Auslösen des Schritts des Sendens der Messsteuerungsinformation, welche die Frequenzinformation der virtuellen Intrafrequenzzelle enthält, an das UE.

5. Verfahren nach Anspruch 4, wobei vor dem Senden (202) der Messsteuerungsinformation, welche die Frequenzinformation der virtuellen Intrafrequenzzelle enthält, an das UE, das Verfahren umfasst:

Erhalten einer UE-Fähigkeitsinformation; und

wenn die UE-Fähigkeitsinformation angibt, dass das UE wenigstens zwei Empfänger aufweist, Auslösen des Schritts des Sendens der Messsteuerungsinformation, welche die Frequenzinformation der virtuellen Intrafrequenzzelle enthält, an das UE.

6. Benutzergerät, UE, umfassend:

eine Informationsempfangseinheit (1102), die dafür ausgelegt ist, eine Messsteuerungsinformation zu empfangen, die durch eine Basisstation gesendet wird, wobei die Messsteuerungsinformation eine Frequenzinformation einer virtuellen Intrafrequenzzelle beinhaltet, und wobei die virtuelle Intrafrequenzzelle eine Zelle in einer Frequenzschicht ist, die einem zweiten Empfänger (1105) des Benutzergeräts entspricht, und wobei sich der zweite Empfänger in einem nicht arbeitenden Frequenzband befindet und nur zur Messung verwendet wird, nicht aber zum Datenempfang verwendet wird; und

der zweite Empfänger (1105) zur Durchführung der virtuellen Intrafrequenzmessung gemäß der Messsteuerungsinformation ausgelegt ist, die durch die Informationsempfangseinheit (1102) empfangen wird, wobei die Messsteuerungsinformation ferner einen Messzeitraum der virtuellen Intrafrequenzmessung und/oder einen Messzeitpunkt in jedem Messzeitraum umfasst; und

wobei der zweite Empfänger (1105) dafür ausgelegt ist, die virtuelle Intrafrequenzmessung in der Intrafrequenzzelle gemäß dem Messzeitraum und/oder dem Messzeitpunkt durchzuführen; und wobei

bevor die Informationsempfangseinheit (1102) dafür eingerichtet ist, eine Messsteuerungsinformation zu empfangen, die von einer Basisstation gesendet wird, das UE dafür eingerichtet ist, Daten durch einen ersten Empfänger zu empfangen und gleichzeitig die Signalqualität in der aktuellen Zelle durch den ersten Empfänger zu messen, wenn die Signalqualität in der Zelle, in der sich das UE aktuell aufhält, eine erste voreingestellte Bedingung erfüllt, wobei eine zweite Sendeeinheit (1104) dafür eingerichtet ist, einen Messbericht der aktuellen Zelle an die Basisstation zu berichten, der die Basisstation darüber informiert, dass ein Signal in der aktuellen Zelle vermindert wurde und eine Intrafrequenz- oder Interfrequenz-Messung in einer benachbarten Zelle gestartet werden muss.

7. Benutzergerät nach Anspruch 6, ferner umfassend:

eine Berichteinheit (1106), die dafür ausgelegt ist, einen Messbericht der virtuellen Intrafrequenzmessung an die Basisstation zu berichten, wenn ein Ergebnis der virtuellen Intrafrequenzmessung, das durch den zweiten Empfänger (1105) erhalten wird, zeigt, dass die Signalqualität in der virtuellen Intrafrequenzzelle eine zweite voreingestellte Bedingung erfüllt.

8. Basisstation, umfassend:

eine Zellenbestimmungseinheit (1202), die dafür ausgelegt ist, eine virtuelle Intrafrequenzzelle in einer benachbarten Zelle zu bestimmen, wobei die virtuelle Intrafrequenzzelle eine Zelle in einer Frequenzschicht ist, die einem zweiten Empfänger eines Benutzergeräts, UE, entspricht, und wobei sich der zweite Empfänger in einem nicht arbeitenden Frequenzband befindet und nur zur Messung verwendet wird, nicht aber zum Datenempfang verwendet wird;
eine Informationserzeugungseinheit (1203), die dafür ausgelegt ist, eine Messsteuerungsinformation zu erzeugen, wobei die Messsteuerungsinformation eine Frequenzinformation der virtuellen Intrafrequenzzelle enthält, die durch die Zellenbestimmungseinheit (1202) bestimmt wurde; und
eine Informationssendeeinheit (1204), die dafür ausgelegt ist, die Messsteuerungsinformation, die durch die Informationserzeugungseinheit (1203) erzeugt wurde, an das UE zu senden, sodass das UE gemäß der Messsteuerungsinformation den zweiten Empfänger zur Durchführung der virtuellen Intrafrequenzmessung startet, wobei die Basisstation ferner dafür eingerichtet ist, einen Messzeitraum der virtuellen Intrafrequenzmessung gemäß einer Leistungsanforderung der Intrafrequenzmessung, einer Leistungsanforderung der Intrafrequenzmessung in einem Fall der Verwendung eines diskontinuierlichen Empfangs, DRX, einem bei der Intrafrequenzmessung verwendeten DRX-Zeitraum oder einer Art der Zeitschlitzkonfiguration einer periodischen Interfrequenzmessung im zweiten Empfänger des UE zu bestimmen und den Messzeitpunkt in jedem Messzeitraum gemäß der Leistung des UE zu bestimmen, und wobei die Informationserzeugungseinheit (1203) dafür ausgelegt ist, die Messsteuerungsinformation ferner mit dem Messzeitraum der virtuellen Intrafrequenzmessung und dem Messzeitpunkt in jedem Messzeitraum zu erzeugen,
wobei bevor die Sendeeinheit (1204) dafür eingerichtet ist, die Messsteuerungsinformation der virtuellen Intrafrequenzzelle an das UE zu senden, die Basisstation ferner dafür eingerichtet ist, einen Messbericht zu empfangen, der durch das UE berichtet wird; wobei der Bericht berichtet wird, wenn ein erster Empfänger des UE dafür eingerichtet ist, zu messen, dass die Signalqualität einer Zelle, in der sich das UE aktuell aufhält, eine erste voreingestellte Bedingung erfüllt, und wobei der erste Empfänger zur Datenübertragung verwendet wird; oder wenn die Basisstation dafür eingerichtet ist, zu bestimmen, dass die Signalqualität einer Zelle, in der sich das UE aktuell aufhält, eine erste voreingestellte Bedingung erfüllt, und das Senden der Messsteuerungsinformation, welche die Frequenzinformation der virtuellen Intrafrequenzzelle enthält, an das UE auszulösen.

9. Basisstation nach Anspruch 8, ferner umfassend:

eine Erhaltungseinheit (1201), die dafür ausgelegt ist, eine UE-Fähigkeitsinformation des UE zu erhalten; und
eine Steuerungseinheit (1202), die dafür ausgelegt ist, wenn die durch die Erhaltungseinheit (1201) erhaltene UE-Fähigkeitsinformation angibt, dass das UE wenigstens zwei Empfänger aufweist, die Informationssendeeinheit (1204) auszulösen, um die Messsteuerungsinformation, welche die Frequenzinformation der virtuellen Intrafrequenzzelle enthält, an das UE zu senden.

## Revendications

1. Procédé de mesure de données consistant à :

recevoir (101) avec un équipement d'utilisateur, UE, des informations de commande de mesure envoyées depuis une station de base, dans lequel les informations de commande de mesure comprennent des informations de fréquence d'une cellule intra-fréquence virtuelle, dans lequel la cellule intra-fréquence virtuelle est une cellule sur une couche de fréquence correspondant à un second récepteur de l'UE, et le second récepteur est sur une fréquence non opérationnelle et est utilisé pour la mesure uniquement mais pas pour la réception de données ; et démarrer (102), avec l'UE en fonction des informations de commande de mesure, le second récepteur pour effectuer une mesure inter-fréquence virtuelle, dans lequel les informations de commande de mesure comprennent en outre une période de mesure de la mesure-intra-fréquence virtuelle et/ou un temps de mesure dans chaque période de mesure ; et
le démarrage (102), avec l'UE en fonction des informations de commande de mesure, du second récepteur pour effectuer une mesure inter-fréquence virtuelle consiste à :

démarrer, avec l'UE, le second récepteur en fonction des informations de fréquence de sorte que le second récepteur effectue la mesure inter-fréquence virtuelle sur la cellule intra-fréquence en fonction de la période de mesure et/ou du temps de mesure ; dans lequel

avant de recevoir (101), avec l'UE, les informations de commande de mesure envoyées depuis une station de base, le procédé consiste à :

recevoir, avec l'UE, des données via un premier récepteur, et en même temps mesurer une qualité de signal dans la cellule courante via le premier récepteur ;

si la qualité de signal dans la cellule où l'UE se trouve actuellement répond à une première condition prédéfinie, rapporter, avec l'UE, un rapport de mesure de la cellule courante à la station de base, informant la station de base qu'un signal dans la cellule courante a été dégradé et qu'une cellule voisine intra-fréquence ou inter-fréquence doit être démarrée.

2. Procédé selon la revendication 1, dans lequel la période de mesure est déterminée par la station de base en fonction d'une exigence de performance de mesure intra-fréquence, d'une exigence de performance de mesure intra-fréquence dans le cas où on utilise une réception discontinue, DRX, d'une période DRX utilisée dans la mesure intra-fréquence, ou d'une manière de configuration de créneau temporel de mesure inter-fréquence périodique dans le second récepteur de l'UE ; et

le temps de mesure est déterminé en fonction de la performance de l'UE.

3. Procédé selon la revendication 1 ou 2, dans lequel après le démarrage (102), avec l'UE en fonction des informations de commande de mesure, du second récepteur pour effectuer une mesure inter-fréquence virtuelle, le procédé consiste en outre à :

rapporter, avec l'UE, un rapport de mesure de la mesure intra-fréquence virtuelle à la station de base lorsqu'un résultat de la mesure intra-fréquence virtuelle montre que la qualité de signal de la cellule intra-fréquence virtuelle répond à une seconde condition prédéfinie.

4. Procédé de mesure de données effectué par une station de base, consistant à :

déterminer (201) une cellule intra-fréquence virtuelle dans une cellule voisine, dans lequel la cellule intra-fréquence virtuelle est une cellule sur une couche de fréquence correspondant à un second récepteur d'un équipement d'utilisateur, UE, et le second récepteur est sur une fréquence non opérationnelle et est utilisé pour la mesure uniquement mais pas pour la réception de données ; et

envoyer (202) des informations de commande de mesure qui comprennent des informations de fréquence de la cellule intra-fréquence virtuelle à l'UE de sorte que l'UE démarre, en fonction des informations de commande de mesure, le second récepteur pour effectuer une mesure intra-fréquence virtuelle, comprenant en outre :

déterminer une période de mesure de la mesure intra-fréquence virtuelle en fonction d'une exigence de performance de mesure intra-fréquence, d'une exigence de performance de mesure intra-fréquence dans le cas où on utilise une réception discontinue, DRX, d'une période DRX utilisée dans la mesure intra-fréquence, ou d'une manière de configuration de créneau temporel de mesure inter-fréquence périodique dans le second récepteur de l'UE, et déterminer un temps de mesure dans chaque période de mesure en fonction de la performance de l'UE ; et

transporter, dans les informations de commande de mesure, la période de mesure de la mesure intra-fréquence virtuelle et/ou le temps de mesure dans chaque mesure intra-fréquence, et envoyer les informations de commande de mesure à l'UE ;

dans lequel avant d'envoyer (202) les informations de commande de mesure qui comprennent des informations de fréquence de la cellule intra-fréquence virtuelle à l'UE, le procédé consiste à :

recevoir un rapport de mesure rapporté par l'UE, dans lequel le rapport est rapporté lorsqu'un premier récepteur de l'UE mesure que la qualité de signal d'une cellule où l'UE se trouve actuellement répond à une première condition prédéfinie, et le premier récepteur est utilisé pour la transmission de données ; ou

si la station de base détermine que la qualité de signal d'une cellule où l'UE se trouve actuellement répond à une première condition prédéfinie, déclencher l'étape consistant à envoyer les informations de commande de mesure qui comprennent les informations de fréquence de la cellule intra-fréquence virtuelle à l'UE.

**5.** Procédé selon la revendication 4, dans lequel avant d'envoyer (202) les informations de commande de mesure qui comprennent les informations de fréquence de la cellule intra-fréquence virtuelle à l'UE, le procédé consiste à :

obtenir des informations de capacité d'UE ; et
lorsque les informations de capacité d'UE indiquent que l'UE comprend au moins deux récepteurs, déclencher l'étape consistant à envoyer les informations de commande de mesure qui comprennent les informations de fréquence de la cellule intra-fréquence virtuelle à l'UE.

**6.** Equipement d'utilisateur, UE, comprenant :

une unité de réception d'informations (1102) conçue pour recevoir des informations de commande de mesure envoyées depuis une station de base, dans lequel les informations de commande de mesure comprennent des informations de fréquence d'une cellule intra-fréquence virtuelle, dans lequel la cellule intra-fréquence virtuelle est une cellule sur une couche de fréquence correspondant à un second récepteur (1105) de l'équipement d'utilisateur, et le second récepteur est sur une fréquence non opérationnelle et est utilisé pour la mesure uniquement mais pas pour la réception de données ; et
le second récepteur (1105) conçu pour effectuer une mesure intra-fréquence virtuelle en fonction d'informations de commande de mesure reçues par l'unité de réception d'informations (1102), dans lequel les informations de commande de mesure comprennent en outre une période de mesure de la mesure intra-fréquence virtuelle et/ou un temps de mesure dans chaque période de mesure ; et
dans lequel ledit second récepteur (1105) est conçu pour effectuer ladite mesure intra-fréquence virtuelle sur la cellule intra-fréquence en fonction de la période de mesure et/ou du temps de mesure ; et dans lequel, avant que l'unité de réception d'informations (1102) reçoive des informations de commande de mesure envoyées depuis une station de base, l'UE est conçu pour recevoir des données via un premier récepteur et en même temps mesurer une qualité de signal dans la cellule courante via le premier récepteur, si la qualité de signal dans la cellule où l'UE se trouve actuellement répond à une première condition prédéfinie, une seconde unité d'envoi (1104) est conçue pour rapporter un rapport de mesure de la cellule courante à la station de base, informant la station de base qu'un signal dans la cellule courante a été dégradé et qu'une cellule voisine intra-fréquence ou inter-fréquence doit être démarrée.

**7.** Equipement d'utilisateur selon la revendication 6, comprenant en outre :
une unité de rapport (1106) conçue rapporter un rapport de mesure de la mesure intra-fréquence virtuelle à la station de base lorsque qu'un résultat de la mesure intra-fréquence virtuelle obtenu par le second récepteur (1105) montre que la qualité de signal de la cellule intra-fréquence virtuelle répond à une seconde condition prédéfinie.

**8.** Station de base comprenant :

une unité de détermination de cellule (1202) conçue pour déterminer une cellule intra-fréquence virtuelle dans une cellule voisine, dans laquelle la cellule intra-fréquence virtuelle est une cellule sur une couche de fréquence correspondant à un second récepteur d'un équipement d'utilisateur, UE, et le second récepteur est sur une fréquence non opérationnelle et est utilisé pour la mesure uniquement mais pas pour la réception de données ;
une unité de génération d'informations (1203) conçue pour générer des informations de commande de mesure, dans laquelle les informations de commande de mesure comprennent des informations de fréquence de la cellule intra-fréquence virtuelle déterminée par l'unité de détermination de cellule (1202) ; et
une unité d'envoi d'informations (1204) conçue pour envoyer les informations de commande de mesure générées par l'unité de génération d'informations (1203) à l'UE de sorte que l'UE démarre, en fonction des informations de commande de mesure, le second récepteur pour effectuer une mesure intra-fréquence virtuelle ;
dans laquelle la station de base est en outre conçue pour déterminer une période de mesure de la mesure intra-fréquence virtuelle en fonction d'une exigence de performance de mesure intra-fréquence, d'une exigence de performance de mesure intra-fréquence dans le cas où on utilise une réception discontinue, DRX, d'une période DRX utilisée dans la mesure intra-fréquence, ou d'une manière de configuration de créneau temporel de mesure inter-fréquence périodique dans le second récepteur de l'UE, et déterminer un temps de mesure dans chaque période de mesure en fonction de la performance de l'UE, et dans laquelle l'unité de génération d'informations (1203) est conçue pour générer lesdites informations de commande de mesure ainsi que la période de mesure de la mesure-intra-fréquence virtuelle et le temps de mesure dans chaque période de mesure ;
dans laquelle avant que l'unité d'envoi (1204) envoie les informations de commande de mesure de la cellule intra-fréquence virtuelle à l'UE, la station de base est en outre conçue pour recevoir un rapport de mesure rapporté par l'UE ; dans laquelle le rapport est rapporté lorsqu'un premier récepteur de l'UE mesure que la qualité de signal d'une cellule où l'UE se trouve actuellement répond à une première condition prédéfinie, et le premier récepteur est utilisé pour la transmission de données ; ou si la station de base détermine que la qualité de signal d'une cellule où l'UE se trouve actuellement répond à une première condition prédéfinie, déclencher l'envoi des informations de commande de mesure qui comprennent les informations de fréquence de la cellule intra-fréquence virtuelle à l'UE.

9. Station de base selon la revendication 8, comprenant en outre :

une unité d'obtention (1201) conçue pour obtenir des informations de capacité d'UE ; et
une unité de commande (1202) conçue pour, lorsque les informations de capacité d'UE obtenues par l'unité d'obtention (1201) indiquent que l'UE comprend au moins deux récepteurs, déclencher l'unité d'envoi d'informations (1204) pour envoyer les informations de commande de mesure qui comprennent les informations de fréquence de la cellule intra-fréquence virtuelle à l'UE.

A UE receives measurement control information sent by a base station.

101

The UE starts, according to the measurement control information, a second receiver to perform virtual intra-frequency measurement.

102

FIG. 1

Determine a virtual intra-frequency cell in a neighboring cell.

201

Send measurement control information that contains frequency information of the virtual intra-frequency cell to a UE.

202

FIG. 2

UE

Base station

301. UE capability reporting.

302. Query a neighboring cell.

303. Intra-frequency measurement reporting

304. Measurement control information

305. Perform virtual intra-frequency measurement.

306. Perform measurement reporting.

FIG. 3

FIG. 4

FIG. 5

Receive configuration of an SRS uplink reference symbol or configuration of a new uplink reference symbol, and a UE's transmit power of an uplink measurement symbol. — 601

Measure the UE according to the configuration of the SRS uplink reference symbol or the configuration of the new uplink reference symbol and the UE's transmit power of the uplink measurement symbol, to obtain an uplink path loss value from the UE to a measurement base station. — 602

Obtain signal received power for the UE to receive a signal from the measurement base station, according to the uplink path loss value and transmit power of the measurement base station. — 603

FIG. 6

Obtain a UE's transmit power of an uplink measurement symbol. — 701

Send configuration of an SRS uplink reference symbol or configuration of a new uplink reference symbol, and the UE's transmit power of the uplink measurement symbol to a measurement base station. — 702

FIG. 7

```
┌──────────┐        ┌──────────────┐              ┌──────────────────┐
│          │        │ Serving base │              │ Measurement base │
│    UE    │        │   station    │              │     station      │
└──────────┘        └──────────────┘              └──────────────────┘
     │    ──Measurement──►  │                              │
     │           ╭──────────────────────────╮             │
     │           │  801. Obtain a parameter. │            │
     │           ╰──────────────────────────╯             │
     │                      │                              │
     │                      │  802. A UE's transmit power on an
     │                      │      uplink measurement symbol,
     │                      ├   configuration of an SRS uplink   ►
     │                      │ reference symbol or configuration of
     │                      │   a new uplink reference symbol
     │                      │                              │
     │◄──803. Perform uplink measurement of the UE.──────  │
     │                      │          ╭───────────────────────────╮
     │                      │          │ 804. Process a measurement │
     │                      │          │          result.          │
     │                      │          ╰───────────────────────────╯
     │                      │◄─805. Report a measurement report.─  │
     │                      │                              │
```

FIG. 8

## SC-FDMA block

$l = 0$    :    $l = 6$   $l = 0$    :    $l = 6$

FIG. 9

FIG. 10

1101     1102     1103

| First reporting unit | Information receiving unit | First receiver |
|---|---|---|

1106     1105

| Third reporting unit | Second receiver | Second reporting unit |
|---|---|---|

1104

FIG. 11

1204
1203   Information generating unit    Information sending unit

1205
1202   Cell determining unit    Measurement report receiving unit

1206
1207   Controlling unit    Handover deciding unit

1201   Obtaining unit

FIG. 12

1301

First report receiving unit

1302

Power calculating unit

1303

Configuration information obtaining unit

1304

Configuration information sending unit

1305

Second report receiving unit

1306

Deciding unit

FIG. 13

1402

First calculating unit

14021

Power measurement module

14022

Filtering module

1401

Information obtaining unit

1405

Measurement reporting unit

1403

Power obtaining unit

1404

Second calculating unit

14023

Calculating module

FIG. 14

1501

User equipment

1502

Base station

FIG. 15

1601

Serving base station

1602

Measurement base station

FIG. 16

**EP 2 642 785 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090270103 A1
- WO 2010019803 A1